**Europäisches Patentamt**

**European Patent Office**

**Office européen des brevets**

(19)

(11) Veröffentlichungsnummer: **0 066 214**

**A1**

(12) # EUROPÄISCHE PATENTANMELDUNG

(21) Anmeldenummer: **82104451.8**

(22) Anmeldetag: **21.05.82**

(51) Int. Cl.³: **B 01 F 1/00**
**C 01 B 33/32**

(30) Priorität: **30.05.81 DE 3121669**

(43) Veröffentlichungstag der Anmeldung:
**08.12.82 Patentblatt 82/49**

(84) Benannte Vertragsstaaten:
**AT BE CH DE FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Krings, Heinrich**
**Adolf-Menzel-Strasse 8**
**D-4006 Erkrath(DE)**

(72) Erfinder: **von Laufenberg, Jürgen, Dr.**
**Scheidemann Strasse 5**
**D-5657 Haan 1(DE)**

(72) Erfinder: **Novotny, Rudolf, Dr.**
**Am Rittersberg 14**
**D-4000 Düsseldorf 13(DE)**

(54) **Kontinuierliches Verfahren zur Reaktion von in flüssiger Phase vorliegenden Komponenten mit in körniger Form vorliegenden Komponenten.**

(57) Kontinuierliches Verfahren zur Reaktion von einer oder mehreren in flüssiger Phase vorliegenden Komponenten mit einer oder mehreren in körniger Form vorliegenden Komponenten in einem Reaktionsgefäß wobei das Reaktionsgemisch kontinuierlich in das Reaktionsgefäß gegen den in diesem herrschenden Druck von unten eingefördert wird und die in körniger Form vorliegenden Komponenten aufgelöst werden, wobei in einem vertikal angeordneten Reaktionsgefäß eine vertikale Stromklassierung der körnigen Reaktionskomponenten gegen die Schwerkraft durchgeführt wird.

EP 0 066 214 A1

./...

FIG.1

Kontinuierliches Verfahren zur Reaktion von in
flüssiger Phase vorliegenden Komponenten mit in
körniger Form vorliegenden Komponenten.

Gegenstand der vorliegenden Erfindung ist ein kontinuierliches Verfahren zur Reaktion von einer oder
mehreren in flüssiger Phase vorliegenden Komponenten
mit einer oder mehreren in körniger Form vorliegenden
Komponenten in einem Reaktionsgefäß, wobei das Reaktionsgemisch kontinuierlich in ein vertikal angeordnetes Reaktionsgefäß gegen den in diesem herrschenden Druck von unten
eingefördert wird und die in körniger Form vorliegenden
Komponenten aufgelöst werden.

Verfahren der vorgenannten Art, bei denen also während
der Reaktion in körniger Form vorliegende Komponenten
mit in flüssiger Phase vorliegenden Komponenten reagieren, wobei die in körniger Form vorliegenden Komponenten sich auflösen, gibt es in großer Zahl. Ein
Beispiel hierfür ist die Herstellung von wasserlöslichen
Natriumsilikaten, dem sogenannten Wasserglas. Die
Herstellung erfolgt derart, daß Sand mit wäßriger
Natriumhydroxidlösung unter erhöhtem Druck und bei
erhöhter Temperatur in einem Verhältnis umgesetzt
wird, das dem Verhältnis Natriumoxid zu $SiO_2$ in dem
herzustellenden Produkt entspricht. Ein derartiges Verfahren ist z.B. in der DE-PS 968 034 beschrieben. Die
Ausgangsprodukte werden dabei homogen gemischt und kontinuierlich in ein Reaktionsrohr gegen den in diesem
herrschenden Druck eingefördert. Die lineare Strömungsgeschwindigkeit im Reaktionsrohr wird dabei so groß gewählt, daß der körnige Reaktionsteilnehmer, die Kieselsäure, gleichmäßig verteilt bleibt und sich nicht absetzt (DE-PS 968 034, Seite 2, Zeilen 9 bis 11). Die
gleichmäßige Verteilung der Kieselsäure in dem Gemisch

0066214
D 6287 EP

wird also durch Regulierung der linearen Strömungsgeschwindigkeit gewährleistet. Mit diesem Verfahren
lassen sich bereits recht gute Raum-Zeit-Ausbeuten
erhalten. Nach diesem Verfahren müssen jedoch verhältnismäßig lange Reaktionsrohre eingesetzt werden, um
eine ausreichende Verweilzeit zu gewährleisten, die
erforderlich ist, um die körnigen Bestandteile aufzulösen.

Der vorliegenden Erfindung liegt die Aufgabenstellung
zugrunde, das bekannte Verfahren wirksamer zu gestalten
und insbesondere die Länge der Reaktionsgefäße zu vermindern und damit den Verschleiß an hochwertigen Apparaturen
zu reduzieren.

Es wurde nun überraschenderweise gefunden, daß diese
Aufgabenstellung in einfacher Weise dadurch gelöst
werden kann, daß im Gegensatz zum Stand der Technik
die körnigen Komponenten im Reaktionsgefäß nicht gleichmäßig verteilt bleiben, sondern daß eine Beladung eines
vertikal angeordneten Reaktionsgefäßes mit den körnigen
Komponenten in der Weise erfolgt, daß eine Trennung des
Korngemisches nach Korngrößen durchgeführt wird.

Gegenstand der vorliegenden Erfindung ist demgemäß
ein Verfahren zur Reaktion von einer oder mehreren in
flüssiger Phase vorliegenden Komponenten mit einer oder
mehreren in körniger Form vorliegenden Komponenten in
einem            Reaktionsgefäß, wobei das Reaktionsgemisch kontinuierlich in das Reaktionsgefäß gegen den
in diesem herrschenden Druck von unten eingefördert
wird und die in körniger Form vorliegenden Komponenten
aufgelöst werden, das dadurch gekennzeichnet ist, daß
in einem vertikal angeordneten Reaktionsgefäß eine vertikale Stromklassierung der körnigen Reaktionskomponenten
gegen die Schwerkraft durchgeführt wird.

BAD ORIGINAL

Das Verfahren gemäß der Erfindung kann beispielsweise in vorzüglicher Weise angewandt werden auf die Herstellung von wasserlöslichen Natriumsilikaten durch Umsetzung von Sand mit wäßriger Natriumhydroxidlösung unter Druck und bei erhöhten Temperaturen in einem Verhältnis, das dem Verhältnis Natriumoxid zu $SiO_2$ in dem herzustellenden Produkt entspricht. Das vorgenannte Beispiel für das Verfahren gemäß der Erfindung wird deshalb genannt, weil es im Geschäftsbetrieb der Anmelderin besondere Bedeutung besitzt. Grundsätzlich kann aber das Verfahren gemäß der Erfindung auf alle Reaktionen der eingangs geschilderten Art angewandt werden.

Die hydrothermale Herstellung von wasserlöslichen Natriumsilikaten kann unter Druck und Temperaturen erfolgen, die für diese Reaktionen bekannt sind (vergleiche u. a. DE-PS 968 034).     Als Sand können die auf diesem technischen Gebiet bekannten Produkte eingesetzt werden, z. B. Quarzsand oder Schmelzsand. 98 Gewichtsprozent des Schmelzsandes haben in der Regel eine Körnung von 100 μm bis 500 μm, der Rest eine kleinere oder größere Körnung. Als Natrium-Hydroxidlösung werden Natronlauge, gegebenenfalls im Gemisch mit Wasser, sogenannte Dünnlauge, eingesetzt. In bekannter Weise beträgt das Gewichtsverhältnis $SiO_2 : Na_2O$ von 1 : 1 bis 2,8 : 1. Die technischen Temperaturen zur Umsetzung der Reaktionskomponenten liegen zweckmäßig im Bereich von 150 bis 250°C, bei Sattdampfdrücken von 3,8 bis 40 bar. Die Drücke im Reaktionsgefäß müssen zur Vermeidung von Dampfbildung um einen sicheren Betrag höher liegen. Über diesen Bereich hinaus ist die Hydrothermal-Synthese möglich, wobei bevorzugt ist ein Temperaturbereich von 170 bis 220°C im Reaktionsgefäß.

BAD ORIGINAL

Die Ausgangskomponenten werden zweckmäßig vorgewärmt in das Reaktionsgefäß eingeleitet. Zur Energieeinsparung kann die Wärme der Fertiglösung verwendet werden, um die Reaktionskomponenten vorzuwärmen.

Durch das Verfahren gemäß der Erfindung wird eine Vertikalsichtung der körnigen Reaktionskomponenten erzielt, mit dem Effekt, daß das gröbere Korn in jeder Stufe zurückgehalten und damit seine Verweilzeit auf seine notwendige Gesamtlösezeit verlängert wird. Hiermit werden die erforderlichen Apparatelängen gegenüber dem bekannten Rohraufschlußverfahren reduziert, da sich nach der Anfahrphase ein erheblicher Kornüberschuß in der Anlage einstellt. Zugeführt wird zwar das Korn-Flüssigkeit-Sollverhältnis, bei der Herstellung von Wasserglas also das Sand-Natronlauge-Sollverhältnis; in der Anlage wird jedoch bei Sandüberschuß die Umsetzung durchgeführt, da die gröberen Sandkörnchen sich im unteren Teil des Reaktionsgefäßes ansammeln und dort ein z.B. Fließbett bilden. Die Führung der Reaktionskomponenten im Gleichstrom durch das Reaktionsgefäß beginnt beim maximalen Konzentrationsverhältnis zwischen Grobsand und Natronlauge und endet mit dem Rest-Reaktionsverhältnis zwischen feinst dispersem Feinsand und der praktisch vollständig flüssigen Phase, bzw. der fertigen Natriumsilikat-Lösung. Durch die vollständige Auflösung des Sandes entfällt für technische Natriumsilikatlösungen das Abfiltrieren von noch ungelöstem Sand. Bei hohen Ansprüchen müßten mit den Rohstoffen eingebrachte Verunreinigungen abfiltriert werden. Dies gilt gleichermaßen für andere Reaktionssysteme.

Die vertikale Stromklassierung gegen die Schwerkraft ist eine an sich bekannte Maßnahme, um ein Feststoffgemenge (Korngemisch) nach Korngrößen zu trennen. Das

BAD ORIGINAL

körnige Gut wird also in Klassen gleicher Endfallgeschwindigkeit im flüssigen Medium getrennt. Diese Klassierung wird durch die Wahl einer der Sinkgeschwindigkeit der groben Körner angepassten Aufwärtsströmung der flüssigen Reaktionskomponente erreicht, wobei die Aufwärtsströmung durch Einbau von perforierten Böden im Reaktionsgefäß stabilisiert wird. Es wird dadurch erreicht, daß die groben Körner infolge der höheren Sinkgeschwindigkeit sich im unteren Teil des Reaktionsraumes konzentrieren und diesen erst vertikal nach oben verlassen, nachdem durch Aufschluß die Korngröße um einen entsprechenden Betrag abgenommen hat. Die Verweilzeit der ursprünglich großen Körner im unteren Bereich des Reaktionsgefäßes wird also auf diese Weise so verlängert, daß auch die groben Körner in einem verhältnismäßig kurzen Reaktionsgefäß vollständig gelöst werden, dessen Länge so eingestellt ist, daß bei Durchführung des bekannten Verfahrens nur die kleineren Körner gelöst werden. Die Verweilzeit der Grobkörner wird also in überaus einfacher Weise auf die notwendige Zeit verlängert, während die Feinkörner entsprechend schnell das Reaktionsgefäß durchlaufen und aufgelöst werden. Es wird also eine erheblich höhere Beladung der flüssigen Komponenten mit körnigen Komponenten erreicht, als es dem Verhältnis im Ausgangsgemisch und Fertigprodukt entspricht. Dadurch reagieren die flüssigen Komponenten mit einem erheblichen Überschuß der festen Komponenten. Es ist außerordentlich überraschend, daß diese sehr wirksamen Effekte in einfacher Weise dadurch erzielt werden können, daß man gleichzeitig mit der Durchführung der Reaktion im vertikalen Reaktionsgefäß eine Stromklassierung der körnigen Reaktionskomponenten durchführt.

Nach einer bevorzugten Ausführungsform des Verfahrens gemäß der Erfindung nimmt die lineare vertikale Strömungsgeschwindigkeit mit zunehmender Höhe des Reaktions-

BAD ORIGINAL

gefäßes ab. Dies wird zweckmäßig dadurch erreicht, daß der Querschnitt des Reaktionsgefäßes mit zunehmender Höhe zunimmt. Der Grund für diese bevorzugte Ausführungsform liegt darin, daß eine höhere lineare vertikale Strömungsgeschwindigkeit in manchen Fällen erforderlich ist, um die gröberen Körner im unteren Bereich des Reaktionsgefäßes in einem Fließbettzustand bzw. als Wirbelbett zu erhalten, während im oberen Bereich für die dort vorliegenden körnigen Bestandteile mit niedrigeren Korngrößen eine geringere Geschwindigkeit ausreicht.

Die Vertikalsichtung der körnigen Bestandteile kann dadurch gefördert werden, daß die Komponenten pulsierend in das Reaktionsgefäß eingefördert werden. Dies kann z. B. in einfacher Weise durch Einsatz einer Membrankolbenpumpe erfolgen.

Nach einer anderen bevorzugten Ausführungsform wird das Reaktionsgemisch durch im Reaktionsgefäß angeordnete mechanische Einbauten, vorzugsweise perforierte Böden gedrückt. Die Perforierung dieser Böden oder die offenen Querschnitte anderer Einbauten, die die gleiche Wirkung haben, soll für eine gleichmäßige Verteilung einerseits möglichst eng sein, andererseits müssen die Löcher groß genug gegenüber der Sandkörnung sein. Die Vertikalsichtung wird durch solche Böden oder Einbauten ebenfalls begünstigt.

Eine andere zweckmäßige Ausführungsform des Verfahrens gemäß der Erfindung ist dadurch gekennzeichnet, daß die am Kopf eines Reaktionsgefäßes austretende Suspension, die noch nicht umgesetzte Körner enthält, in ein in Serie geschaltetes weiteres Reaktionsgefäß von unten gegen den in diesem herrschenden Druck eingefördert wird und in diesem eine vertikale Stromklassierung der körnigen Reaktionskomponenten gegen die Schwerkraft durchgeführt wird. Wenn also in einem ersten Reaktionsgefäß die körnigen Bestandteile noch nicht vollständig gelöst werden, kann das Reaktionsgemisch in ein weiteres Reaktionsgefäß geleitet und dort in im Prinzip gleicher Weise wie im ersten Gefäß zur Umsetzung gebracht werden. Gegebenenfalls kann diese Maßnahme wiederholt werden, es können also auch mehr als zwei Reaktionsgefäße hintereinander geschaltet werden. Zweckmäßig besitzt jedes weitere Reaktionsgefäß einen größeren Querschnitt als das vorhergehende Reaktionsgefäß, um damit die lineare Strömungsgeschwindigkeit im weiteren Reaktionsgefäß den Korngrößen angepasst, gegenüber dem vorhergehenden Reaktionsgefäß zu vermindern.

Durch das Hintereinanderschalten mehrerer solchermaßen dimensionierter Reaktionsgefäße erhält man bald eine Feinstdispersion, deren Sinkgeschwindigkeit sehr klein, die Absitzzeit mithin groß und damit größer als die Restlösezeit (bis zur völligen Auflösung des Feinstkorns) sind. Dieser Restlösevorgang kann in einem entsprechend groß dimensionierten Reaktionsgefäß oder einer übereinander angeordneten Reaktionsgefäß-Kaskade ablaufen. Hierbei wird die Dichteschichtung gemäß dem Grundgedanken der Erfindung genutzt. Sie kommt u. a. durch die Tatsache zustande, daß die Dichte der Endlösung geringer als die scheinbare der Feinstdispersion aus Lösung und Sand ist. Zur apparativen Vereinfachung können mehrere Reaktionsgefäße nebeneinander angeordnet werden, wobei über eine Rohrleitung das Reaktionsgemisch vom Kopf eines Reaktionsgefäßes in das darauffolgende Reaktionsgefäß von unten eingefördert wird.

In der Anfahrphase tritt eine Anreicherung der körnigen Bestandteile im Reaktionsgefäß ein, bis dort ein Überschuß vorhanden ist. Dadurch wird zunächst als Endlösung eine solche erhalten, die einen verminderten Anteil

BAD ORIGINAL

an dem Bestandteil hat, der als körniges Produkt zugeführt wird. Es kann in der Anfahrphase aber auch mit
einem erhöhten Anteil an körnigem Produkt gearbeitet
werden, bis der Gleichgewichtszustand erreicht ist.

Die Erfindung wird anhand der beiliegenden Zeichnung
erläutert. Es handelt sich um schematische Darstellungen.
In den Figuren werden gleiche Teile mit den gleichen
Bezugszeichen versehen.

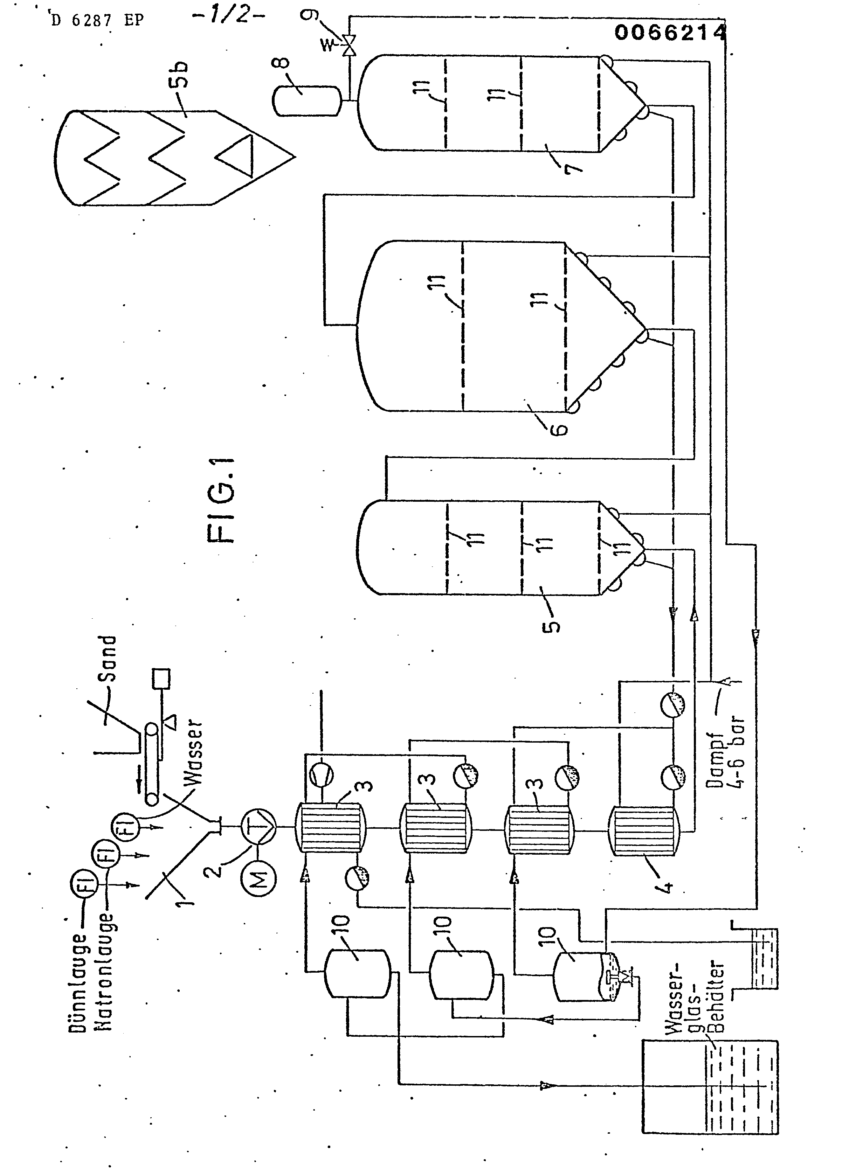

Zunächst wird das Schema gemäß Figur 1 erläutert.
Aus Vorratsbehältern werden die Ausgangsstoffe Sand,
z. B. Schmelzsand (Körnung 98 % von 100 µm bis 500 µm)
Natronlauge, Dünnlauge und/oder Wasser in technisch bekannter Weise im gewünschten Verhältnis dosiert und kontinuierlich kalt mit einer Einzylinder-Membrankolbenpumpe
2, möglichst mit hängenden Ventilen, auf den erforderlichen Druck gebracht. Diese Temperatur erlaubt den
Einsatz von Weichdichtungen, und die Anordnung als
hängende Kegel- oder Klappenventilen verhindert das
Einklemmen von Grobsand zwischen Ventil und Sitz.

Die Ansatzkomponenten werden zunächst über zwei Wärmetauschergruppen geführt. Sie durchströmen vertikal absinkend die (Nickel-) Innenrohre mehrerer hintereinandergeschalteter Rohrbündelwärmetauscher 3, die mit dem
Dampf der in mehreren Entspannungsstufen ausdampfenden
flüssigen Wasserglaslösung bei ansteigender Temperatur
vorgeheizt wird. Diesem nachgeschaltet ist ein Wärmetauscher 4, in dem mittels Zusatzwärme (.z.B. überhitztem
Dampf)                          auf die gewünschte Reaktionstemperatur aufgeheizt wird.

Durch die stufenweise Aufheizung mit dem Dampf der enspannenden Fertiglösung wird dreierlei erreicht.

1.) Die Lösung wird durch den Entzug des Dampfes eingedickt. Hierdurch wird einem Liter Lösung bei der Entspannung von z. B. 220$^{o}$C auf 70$^{o}$C etwa 1/4 ltr. Wasser entzogen.

2.) Die bekannten sehr guten Wärmeübergangswerte des Verdampfungs- und Kondensationsvorganges führen zu kleinen Wärmetauschern.

3.) Die unzugänglichen Außenseiten der Rohre im Rohrbündeltauscher werden vom Dampf beaufschlagt. Bei einem direkten Austausch mit Fertiglösung würden sie bald Ablagerungen ansetzen.

Nunmehr werden die Ausgangskomponenten einem senkrechten Rohr 5 zugeführt, das in verschiedenen Höhen im Abstand von 0,8 - 1 m mit Siebböden 11 ausgerüstet ist. Rohrdurchmesser und Flüssigkeitsmenge und damit der Durchsatz sind so bemessen, daß z. B. die auf den freien Rohrquerschnitt bezogene Flüssigkeitsgeschwindigkeit einer 50 % Natronlauge ($\rho$ = 1,5 kg/dm$^{3}$) v = 0,25 cm/sec = 9 m/h erreicht. (Für geringere Dichten steigt die Mindestgeschwindigkeit nur wenig an). Bei dieser Geschwindigkeit bildet sich im Rohr und über den Zwischenböden jeweils ein Fließ- bzw. Wirbelbett aus. Aus diesem werden die feineren Fraktionen nach oben ausgetragen, so daß sich eine Vertikalsichtung einstellt, bei der sich auf dem ersten Zwischenboden ein Fließbett aus Grobkorn mit einer Beladung von etwa 1 kg Sand/dm$^{3}$ ausbildet. Die Zwischenböden haben die Aufgabe zur Stabilisierung des Wirbelbettes zu sorgen. Dazu sind sie mit 1,5 mm $\emptyset$ Löchern im Abstand von 40 mm im Dreieckverband gebohrt zu versehen. Ohne sie kann es manch-

CPA-G.PCI-SATZSPIEGEL PAPIER

0066214

mal zu Entmischungserscheinungen in der Suspension in hoch- und niedrig beladene Partien und damit zu unerwünschten Dichteströmungen kommen. Durch diese Anordnung stellt sich im Rohr ein weitgehend stabiles Fließbett mit nach oben abnehmender Sandbeladung und Korngröße ein.

Aus diesem ersten Rohr wird die Suspension in einen zweiten analog aufgebauten Rohrautoklaven 6 mit einem etwa 2,5-fachen Durchmesser eingeleitet. Die Löcher von 1,5 mm Ø sollten hier einen Abstand von 100 mm untereinander haben. Auch hier laufen nun entsprechende Strömungen und Klassiervorgänge ab. Sie sind in beiden Apparaten dauernd vom Aufschluß des Sandes durch Natronlauge bzw. durch die gebildeten Natriumsilikate begleitet. Dabei nimmt die Korngröße eines jeden Sandkornes ab. Die Klassiervorgänge führen dabei zu einer längeren Verweilzeit für das Grobkorn, das außerdem anfänglich der noch unverbrauchten Natronlauge ausgesetzt ist, während das Feingut immer mehr von einer sich der Endkonzentration nähernden Natriumsilikatlösung aufgeschlossen wird.

Die aus dem zweiten Autoklaven austretende Suspension wird in einen etwa gleichgroßen dritten (Autoklaven) 7 eingeleitet, der durch Zwischenböden mit wenigen kleinen Öffnungen (2 mm Ø, Abstand 100 mm) dreigeteilt ist. In diese 3-teilige Kaskade gelangt nur noch feinstkörniger Sand, dessen Sinkgeschwindigkeit bzw. Absitzzeit größer als die Restlösezeit ist und dessen Suspension ein höheres spezifisches Gewicht als die Fertiglösung hat, infolgedessen nach unten absinkt. Aus dieser Kaskade tritt mithin nur noch Natriumsilikatlösung ohne Restsandanteile aus und wird über ein Reduzierventil 9 einer Kaskade von Ausdampfgefäßen 10 zugeführt. (Dem Reduzierventil ist zum Ausgleichen der pulsierenden Strömung

BAD ORIGINAL

noch ein Windkessel 8 vorgeschaltet.) Der darin ausdampfende Dampf wird den korrespondierenden Rohrbündelwärmetauschern zur Vorheizung der Einsatzkomponenten zugeführt. Die letzte Ausdampfstufe sollte im Unterdruckbereich bei Temperaturen zwischen 70 bis 80°C liegen, um das Wärmegefälle weitestgehend zu nutzen. Da das Kondensat dieses Dampfes der Lösung entzogen wird, ist mit diesem Wärmetauschvorgang gleichzeitig ein Aufkonzentrieren der Natriumsilikatlösung verbunden. Sollte das nicht beabsichtigt sein, so kann das Kondensat wieder der Lösung zugesetzt werden.

Der hier beschriebene apparative Aufbau eignet sich besonders für die Anwendung niedriger Temperaturen von 140 bzw. 160°C, die sich mit 4 bzw. 6 bar Dampf gerade noch erreichen lassen. Dabei empfiehlt sich eine gleichzeitige Beheizung der Autoklaven durch Dampf über aufgeschweißte Heizschlangen. Durch sie wird auch die endotherme Wärme des Löseprozesses nachgeführt.

Andere Einbauten zur Homogenisierung des Fließbettes, z. B. Doppelkegel nach 5b sind möglich. Entscheidend ist eine ausreichende Geschwindigkeit mit einem entsprechenden Druckverlust in den engen Durchtrittsquerschnitten, so daß einseitige Ablagerungen ausgeschlossen werden. Bei Reaktionsrohren ohne Einbauten mit einem Höhen-Durchmesser-Verhältnis > 2 treten manchmal unerwünschte Entmischungserscheinungen auf.

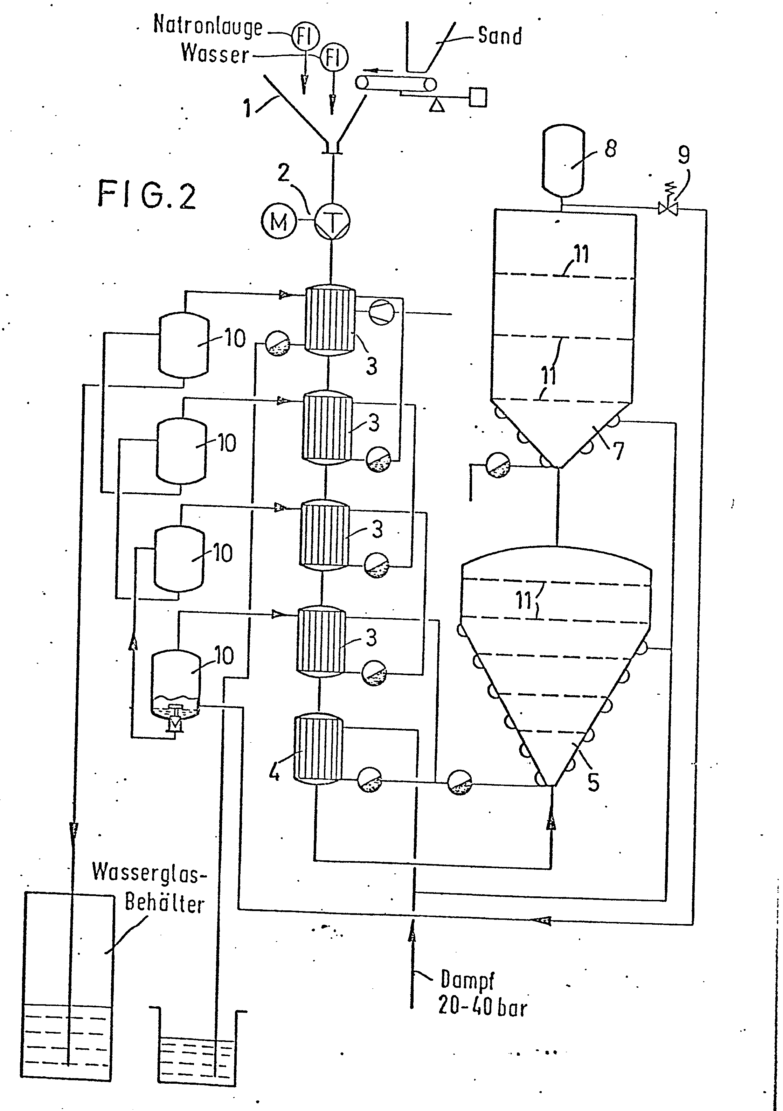

Bei der Beheizung von 20 bzw. 40 bar Dampf (Figur 2) lassen sich Reaktionstemperaturen von etwa 200 bzw. 235°C verwirklichen. Beim Einsatz von Natronlauge über 25 % Na OH, einem $SiO_2/Na_2O$-Verhältnis von 1,5 bis 2,0 sind Raum-Zeit-Ausbeuten weit über 2 t Natriumsilikatlösung je $m^3$ Volumen des Fließbettes zu erwarten. Im

BAD ORIGINAL

Prozess befinden sich alle kleineren Korngrößen bis Null. Gerade die Körnungen unter der des Ausgangsmaterials ($<$ 100 $\mu$m) tragen aber wesentlich zu der für das Lösen entscheidenden Oberfläche bei. Die drei Einflußgrößen Temperatur und Körnung, d. h. spezifische Oberfläche des Sandes, und die höhere Beladung (Sandmenge je m$^3$ Flüssigkeit) tragen zu einer Vergrößerung der Raum-Zeit-Ausbeute im Reaktor bei.

Die in Figur 2 dargestellte Anlage entspricht in ihrem Aufbau im Prinzip der von Figur 1. Wegen der hohen Raum-Zeit-Ausbeute ist der Reaktionsbehälter 5 z.B. mit einem Durchmesser von 3500 mm, einem Kegel von 60$^o$, einer zylindrischen Höhe von 1000 mm und einem Gesamtinhalt von etwa 19 m$^3$ für eine Stundenleistung von mehr als 15 t/h Natriumsilikatlösung mit 20 % $SiO_2$ und einem $SiO_2$/$Na_2O$ Verhältnis von 1,5 : 1 dimensioniert.

Als Beispiel betragen die erforderlichen Durchsätze mindestens:

| | |
|---|---|
| Schmelzsand (ohne Wasseranteil) | 3,-- t/h |
| Natronlauge 50 % | 5,16 " |
| Wasser | 6,84 " |
| Natriumsilikatlösung | 15,-- t/h |

Der untere Zwischenboden 11 mit einem Durchmesser von 1000 mm ist mit 1,5 mm $\emptyset$ Löchern im Abstand von 40 mm im Dreieckverband gebohrt, der zweite 750 mm höher gelegene mit einem Durchmesser von 1866 mm mit Löchern 1,5 mm $\emptyset$ und 75 mm Abstand, der dritte wiederum 750 mm höher gelegene mit einem Durchmesser von 2732 mm mit Löchern 1,5 mm $\emptyset$ und 100 mm Abstand, der vierte und fünfte - je 750 mm höher gelegene mit einem Durchmesser von 3500 mm mit Löchern 1,5 mm $\emptyset$ und 100 mm Abstand.

BAD ORIGINAL

**0066214**
D 6287 EP

Der nachgeschaltete Behälter 7 für die Restauflösung mit einem Durchmesser von 2000 mm, einer zylindrischen Höhe von 3000 mm, mit 60° Kegelboden (ca. 13,5 m³ Inh.) ist vom Kegel ab mit 3 Böden 11 mit Löchern von 2 mm ∅ und einem Abstand von 150 mm untereinander ausgerüstet.

Über ein Druckreduzierventil 9 mit vorgeschaltetem Windkessel 8 gelangt die Fertiglösung in die Ausdampfgefäße 10, die dampfseitig, wie schon angeführt, mit den korrespondierenden Wärmetauschern in Verbindung stehen. Bei dem hier vorliegenden höheren Temperaturgefälle ist die Konzentrationswirkung durch Eindampfen noch wirksamer als im Niederdruckbereich. Vorteilhaft für die Strömungsvorgänge auf den Böden des Fließbettes ist die Verwendung einer Einzylinderverdrängerpumpe, z. B. einer Einkolbenmembranpumpe. Durch ihr intermittierendes Pumpen mit sinusartiger Fördercharakteristik liefert sie eine Spitzenmenge, die das 2,8-fache der mittleren Fördermenge beträgt. Dies erlaubt die Auslegung der Bohrungen in den Zwischenböden auf diese Spitzenmenge mit Druckverlusten, die zur gleichmäßigen Verteilung der Strömung über der gesamten Fläche der Böden notwendig ist.

Der intermittierende Betrieb fördert darüber hinaus im Wirbelbett die Klassierung, da dem über ein Maximum ablaufenden Fördertakt ein gleichlanger ohne Förderung folgt, der zu grobem Korn ein Rückfließen erlaubt. Dieser bei etwa 200° C bzw. 235° C ablaufende Löseprozess hat eine wesentlich höhere Raum-Zeit-Ausbeute, ein größeres Aufkonzentrieren der Lösung beim Entspannungsvorgang und dabei keinen höheren Wärmeverbrauch als der bei geringerer Temperatur ablaufende Löseprozeß.

D 6287 EP
0066214

Patentansprüche:

1. Kontinuierliches Verfahren zur Reaktion von einer oder mehreren in flüssiger Phase vorliegenden Komponenten mit einer oder mehreren in körniger Form vorliegenden Komponenten in einem Reaktionsgefäß, wobei das Reaktionsgemisch kontinuierlich in das Reaktionsgefäß gegen den in diesem herrschenden Druck von unten eingefördert wird und die in körniger Form vorliegenden Komponenten aufgelöst werden, d a d u r c h   g e k e n n z e i c h n e t, daß in einem vertikal angeordneten Reaktionsgefäß eine vertikale Stromklassierung der körnigen Reaktionskomponenten gegen die Schwerkraft durchgeführt wird.

2. Verfahren nach Anspruch 1, dadurch gekennzeichnet, daß zur Herstellung von wasserlöslichen Natriumsilikaten Sand mit wäßriger Natriumhydroxidlösung unter erhöhtem Druck und bei erhöhten Temperaturen in einem Verhältnis zur Reaktion gebracht wird, das dem Verhältnis Natriumoxid zu $SiO_2$ in dem herzustellenden Produkt entspricht.

3. Verfahren nach einem oder mehreren der Ansprüche 1 oder 2, dadurch gekennzeichnet, daß die lineare vertikale Strömungsgeschwindigkeit mit zunehmender Höhe des Reaktionsgefäßes abnimmt.

4. Verfahren nach einem oder mehreren der Ansprüche 1 bis 3, dadurch gekennzeichnet, daß man das Reaktionsgemisch pulsierend in das Reaktionsgefäß einfördert.

5. Verfahren nach einem oder mehreren der Ansprüche 1 bis 4, dadurch gekennzeichnet, daß das Reaktionsgemisch durch im Reaktionsgefäß angeordnete mechanische Einbauten, vorzugsweise perforierte Böden, gedrückt wird.

LFA- u. FCI-SATZSPIEGEL-PAPIER

BAD ORIGINAL

6. Verfahren nach einem oder mehreren der Ansprüche 1 bis 5, dadurch gekennzeichnet, daß die am Kopf eines Reaktionsgefäßes austretende Suspension, die noch nicht umgesetzte Körner enthält, in ein in Serie geschaltetes weiteres Reaktionsgefäß von unten gegen den in diesem herrschenden Druck eingefördert wird und in diesem eine vertikale Stromklassierung der körnigen Reaktionskomponenten gegen die Schwerkraft durchgeführt wird.

BAD ORIGINAL

0066214

FIG.1

# FIG.2

Natronlauge
Wasser

Sand

Wasserglas-
Behälter

Dampf
20-40 bar

Europäisches
Patentamt

EUROPÄISCHER RECHERCHENBERICHT

| | EINSCHLÄGIGE DOKUMENTE | | KLASSIFIKATION DER ANMELDUNG (Int Cl.¹) |
|---|---|---|---|
| Kategorie | Kennzeichnung des Dokuments mit Angabe, soweit erforderlich, der maßgeblichen Teile | betrifft Anspruch | |
| X | DD - A - 67 095 (A. KLIER et al.)<br>* Anspruch 1; Fig. 2 *<br>-- | 1,3,6 | B 01 F 1/00<br>C 01 B 33/32 |
| Y | US - A - 3 961 022 (R.H. PIERCE)<br>* Anspruch 1 *<br>-- | 1 | |
| D,Y,<br>X | DE - C - 968 034 (HOECHST)<br>* Anspruch 1 *<br>-- | 1,2 | |
| X | DE - A1 - 2 546 279 (BAYER AG)<br>* Ansprüche 1, 3, 4 *<br>-- | 4,5 | RECHERCHIERTE SACHGEBIETE (Int Cl.³)<br><br>B 01 F 1/00<br>B 01 F 3/00<br>C 01 B 33/00 |
| P,A | EP - A1 - 0 033 109 (HENKEL KG)<br>-- | | |
| A | DE - A - 2 118 661 (F. SPALINK)<br>---- | | |

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Grunden angeführtes Dokument

&: Mitglied der gleichen Patentfamilie, übereinstimmendes Dokument

| | Der vorliegende Recherchenbericht wurde für alle Patentansprüche erstellt. | | |
|---|---|---|---|
| Recherchenort<br>Berlin | Abschlußdatum der Recherche<br>04-08-1982 | Prüfer<br>KESTEN | |

EPA form 1503.1 06.78